Europäisches Patentamt

European Patent Office

Office européen des brevets

(11) Publication number: **0 487 995 A2**

# EUROPEAN PATENT APPLICATION

(21) Application number: **91119516.2**

(22) Date of filing: **15.11.91**

(51) Int. Cl.⁵: **B60R 16/02**

(30) Priority: **30.11.90 US 621194**

(43) Date of publication of application:
**03.06.92 Bulletin 92/23**

(84) Designated Contracting States:
**DE FR GB IT**

(71) Applicant: **ROCKWELL INTERNATIONAL CORPORATION**
**625 Liberty Avenue**
**Pittsburg, Pennsylvania 15222-3123(US)**

(72) Inventor: **Periou, Pierre**
**15, les Boccages Bruns**
**F-95000 Cergy-Pontoise(FR)**
Inventor: **Neisch, James C.**
**4560 Valleyview Drive**
**West Bloomfield, Michigan 48303(US)**

(74) Representative: **Leiser, Gottfried, Dipl.-Ing. et al**
**Patentanwälte Prinz, Leiser, Bunke & Partner**
**Manzingerweg 7**
**W-8000 München 60(DE)**

(54) **A system for control of actuators and switches by a remotely located microprocessor using a three wire harness.**

(57) A three-wire wiring harness to accomplish;
1) communication from switches in a vehicle door to an on-board microprocessor and
2) transmitting current for energization of actuators to accomplish the respective switch commands.
The switches each generate a unique impedance which is characteristic of the respective switch position. The switches are connected in parallel such that a change in impedance of any individual switch will produce a change in impedance of the total collection of switches. The net impedance of the collection of switches is recognized by the microprocessor as a result of a change in the resonant frequency of an oscillator. Upon recognition of this impedance, the microprocessor correlates the impedance to respective switch positions and corresponding commands and then implements the respective commands by energizing one of several relays that define paths for flow of current to respective actuators.

Fig-1

## BACKGROUND OF THE INVENTION

### FIELD OF THE INVENTION

This invention relates to systems for controlling actuators using switches having a remotely located microprocessor and, more particularly, to a method for reducing the number of wires required to implement a system for controlling actuators using switches having a remotely located microprocessor.

### DESCRIPTION OF THE PRIOR ART

Automobiles incorporate several switches in the operation of vehicle doors. These switches provide commands to accomplish various modes of locking, security, in addition to providing information such as the respective door position. These switches communicate information to a central controller. A conventional wiring harness interconnecting the switches and controller requires a dedicated wire for each switch plus a common wire. As a result, substantial cost and weight is associated with the respective wiring harness. A reduction in weight may be accomplished by implementing a system incorporating a multiplexing concept in which each switch is connected through a common buss to the central controlling microprocessor. Each switch generates a uniquely signatured signal which is then transmitted to the controlling microprocessor. The signal is then correlated by the microprocessor to a respective command which the microprocessor then implements by energizing actuators over a second buss. Such a smart system results in a reduction in wiring harness cost and weight but requires a substantial investment in the hardware necessary to produce the uniquely signatured signals. Therefore there is a need to develop a low-cost, minimum weight system for controlling actuators using switches having a remotely located microprocessor.

### SUMMARY OF THE PRESENT INVENTION

The present invention utilizes a three-wire wiring harness to accomplish;
   1) communication from switches in a vehicle door to an on-board microprocessor and
   2) transmitting current for energization of actuators to accomplish the respective switch commands.
The switches each generate a unique impedance which is characteristic of the respective switch position. The switches are connected in parallel such that a change in impedance of any individual switch will produce a change in impedance of the total collection of switches. The net impedance of the collection of switches is recognized by the microprocessor as a result of a change in the resonant frequency of an oscillator. Upon recognition of this impedance, the microprocessor correlates the impedance to respective switch positions and corresponding commands and then implements the respective commands by energizing one of several relays that define paths for flow of current to respective actuators.

An embodiment of the present invention includes a vehicular actuator interface circuit for coupling at least one electromechanical actuator and at least one switching mechanism to a controller of the type which controls application of operating power to the actuator in response to changes in state of the switching mechanism, comprising: an oscillator circuit coupled to the controller for supplying command signals to the controller at a selectively controlled frequency; a logic gating circuit coupled to the actuator, to the switching mechanism and to the controller; the switching mechanism including a resistive circuit for selecting the frequency of the oscillator circuit in response to changes in state of the switching mechanism; and the logic gating circuit selectively coupling the resistive circuit to the oscillator circuit to thereby communicate the state of the switching mechanism to the controller and alternately coupling the actuator to the controller thereby applying power to the actuator. Further, the switching mechanism comprises a plurality of switches, each actuable to change the resistance of the resistive circuit in a unique way and the logic gating circuit comprises a plurality of bistable means or relays operated by the controller. The logic gating circuit defines a communication mode in which current is supplied to the resistive circuit. The logic gating circuit defines an actuation mode in which power is supplied to the actuator and current is not supplied to the resistive circuit. The logic gating circuit defines a first actuation mode in which power is supplied to the actuator at a first polarity and a second actuation mode in which power is supplied to the actuator at a second polarity. The circuit further comprising a first actuator and a second actuator and wherein the logic gating circuit defines a first actuation mode in which power is supplied to the first actuator and a second actuation mode in which power is supplied to the second actuator. In another embodiment the circuit further comprising a first actuator and a second actuator and wherein the logic gating circuit defines a first actuation mode in which power is supplied to the first actuator at first polarity, a second actuation mode in which power is supplied to the second actuator at the first polarity, a third actuation mode in which power is supplied to the first actuator at second polarity and a fourth actuation mode in which power is supplied to the second actuator at the second polarity.

Another embodiment of the present invention includes a vehicular actuator interface circuit for coupling at least one electromechanical actuator and at least one switching mechanism to a controller of the type which controls application of operating power to the actuator in response to changes in state of switching mechanism, comprising: a digital command generating circuit communicating with the controller for supplying selected command signals to the controller; a logic gating circuit coupled to the actuator, to the switching mechanism and to the controller; the switching mechanism coupled to the command generating circuit for selecting the command to be sent to the controller in response to changes in state of the switching mechanism; the logic gating circuit selectively coupling the command generating circuit to the controller to thereby communicate the state of the switching mechanism to the controller and alternately coupling the actuator to the controller thereby applying power to the actuator. The switching mechanism comprises a plurality of switches, each actuable to produce a unique code representative of the state of the switch.

These and other aspects of the present invention will become more readily apparent by reference to the following detailed description of the embodiments as shown in the drawings.

## BRIEF DESCRIPTION OF THE DRAWINGS

Figure 1 is a schematic representation of the circuitry of the preferred embodiment of the present invention;

Figure 2 is a table delineating the mode of operation and respective relay positions;

Figure 3 is an illustration of the collection of switches as required to accomplish the passive form of the preferred embodiment of the present invention; and

Figure 4 is an illustration of the collection of switches as required to accomplish an active mode of operation of the present invention.

## DETAILED DESCRIPTION OF THE PREFERRED EMBODIMENT

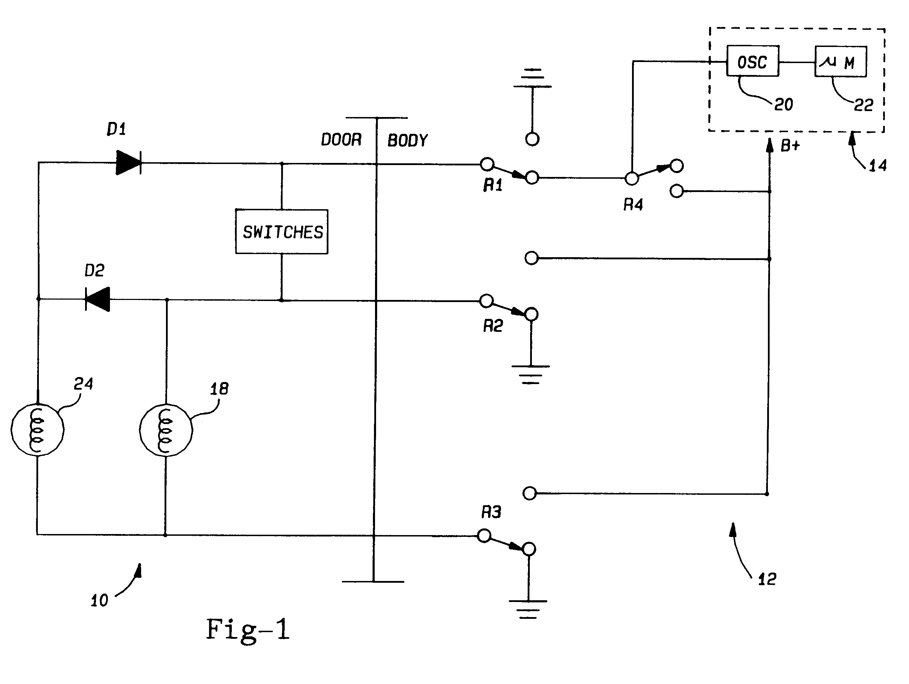

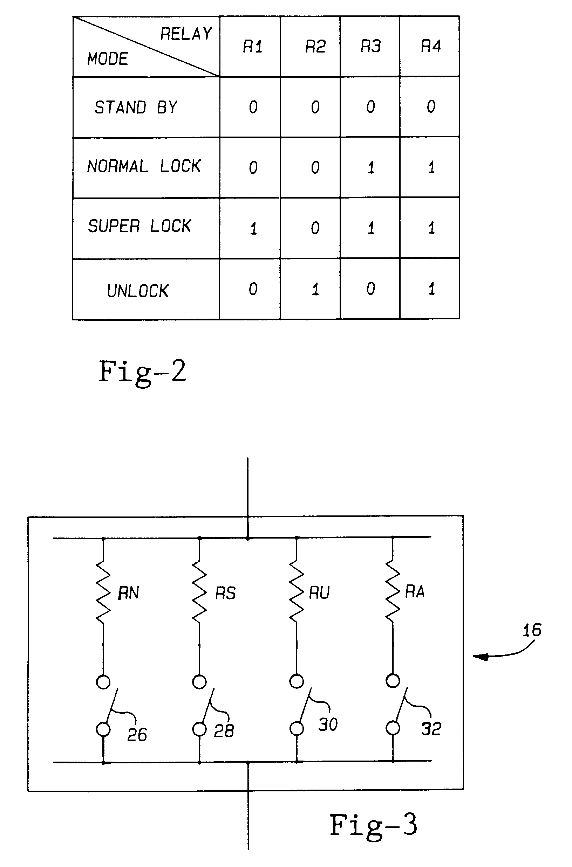

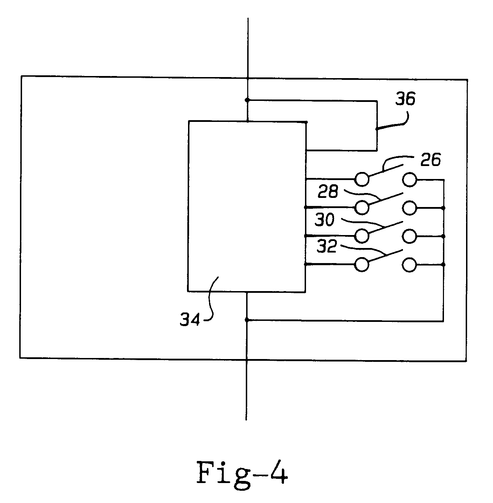

The present invention, as illustrated in Figure 1, comprises three portions; door portion 10, body portion 12 and controller portion 14. A collection of switches 16, as illustrated in Figures 3 and 4 respectively, function to generate commands such as lock/unlock as well as provide status of the door position. The door portion 10 further includes actuators to position the respective mechanical door locking mechanism in the desired mode, i. e., normal lock is accomplished by energizing actuator 18 and super lock is accomplished by energizing actuator 24. Diodes D1 and D2 function to achieve a desired flow of current through the circuit to accomplish the various modes of operation. Body portion 12 includes relays R1, R2, R3 and R4 having switchable contacts with normal positions as shown. Controller portion 14 includes oscillator 20 and microprocessor 22. In the preferred embodiment of the present invention, as shown in Figure 3, the collection of switches 16 include a plurality of individual switches all connected in parallel. Each switch produces a unique impedance based upon the effect of the corresponding fixed resistor. The net impedance of the parallel network of switches may then be correlated to a respective position for each switch.

In operation; normal lock command is generated when switch 26 is closed and current is caused to flow through resistor RN, super lock command is generated when switch 28 is closed causing current to flow through resistor RS, unlock command is generated when switch 30 is closed causing current to flow through resistor RU, and door ajar command is provided when door ajar switch 32 is closed causing current to flow through resistor RA. Any combination of these various switch positions results in a calculable net impedance generated by the collection of switches 16. In this manner oscillator 20 will resonate at a frequency which is a function of the net impedance of the collection of switches 16. The resonant frequency is then transmitted to microprocessor 22. Microprocessor 22 contains a lookup table that correlates the respective resonate frequency to a set of switch positions. Next, microprocessor 22 energizes relays R1, R2, R3 and R4 to implement the respective command.

Operation of the respective circuit to accomplish the various modes of locking operation may be observed by referring to Figure 1 and the table of Figure 2. Figure 1 illustrates the normal position of switchable contacts for relays R1, R2, R3 and R4 at which position oscillator 20 will resonate at a frequency which is a function of the net impedance of the collection of switches 16. The respective resonant frequency is then supplied to microprocessor 22 which then consults a lookup table which correlates the respective resonant frequency to corresponding switch positions. When a combination of switch positions is produced which correlate to a command to implement normal lock mode, microprocessor 22 will energize relays R3 and R4. Energizing R3 causes current to flow through normal lock actuator 18 to provide actuation thereof. Once the door locking mechanism reaches normal lock position, microprocessor 22 interrupts energization of R3. R4 is closed to connect D1 to battery. In this manner, current flow through super lock actuator 24 is prevented during normal lock mode. While R4 is energized no communication to microprocessor 22 can occur. After normal lock actuator 18 reaches lock position, R4 returns to standby position enabling communication to microprocessor 22. If a super lock command is generated, R1, R3 and R4 are energized. In this mode of operation current passes through normal lock actuator 18 and super lock actuator 24 to accomplish super lock mode of operation. While in the normal lock or super lock mode of operation, an unlock command is accomplished by energizing R2 and R4; thereby returning normal lock actuator 18 and super lock actuator 24 to the normal position.

In a second preferred embodiment of the present invention, as shown in Figure 4, switches 26, 28 30 and 32 produce a digital logic level 1 or 0 which is representative of the respective position thereof. Switches 26, 28, 30 and 32 supply digital logic level to inputs of microprocessor 34. Microprocessor 34 produces a unique digital pulse train for each respective position of switches 26, 28, 30 and 32. As an example, a normal lock command will be produced by closing normal lock switch 26. A logic level one input is provided to microprocessor 34. Microprocessor 34 then produces a digital pulse train corresponding with a command to achieve normal lock mode. This pulse train is then communicated on data line 36 to microprocessor 22. In the second embodiment, oscillator 20 is not required. Microprocessor 34 receives the respective data pulse and generates a command to control relays R1, R2, R3 and R4 according to the previously delineated strategy. In this manner, normal lock, superlock, unlock and door ajar information may be communicated from the door portion to the controller portion and the current for energizing actuators for accomplishing the respective commands all using the same three wire harness.

One skilled in the art will readily recognize that certain specific details shown in the foregoing specification and drawings are exemplary in nature and subject to modification without departing from the teachings of the disclosure. For example, the resistors incorporated in the preferred embodiment provide a characteristic impedance which may be provided by other circuit components capable of providing a known impedance valve. Various modifications of the invention discussed in the foregoing description will become apparent to those skilled in the art. All such variations that basically rely on the teachings through which the invention has advanced the art are properly considered within the spirit and scope of the invention.

**Claims**

1. A vehicular actuator interface circuit for coupling at least one electromechanical actuator and at least one switching mechanism to a controller of the type which controls application of operating power to the actuator in response to changes in state of said switching mechanism, comprising:

   an oscillator circuit coupled to said controller for supplying command signals to the controller at a selectively controlled frequency;

   a logic gating circuit coupled to said actuator, to said switching mechanism and to said controller;

   said switching mechanism including a resistive circuit for selecting the frequency of said oscillator circuit in response to changes in state of said switching mechanism;

   and said logic gating circuit selectively coupling said resistive circuit to said oscillator circuit to thereby communicate the state of said switching mechanism to said controller and alternately coupling said actuator to said controller thereby applying power to said actuator.

2. The circuit of Claim 1 wherein said switching mechanism is disposed on the door of the vehicle.

3. The circuit of Claim 1 wherein said actuator is disposed on the door of the vehicle.

4. The circuit of Claim 1 wherein said switching mechanism and said actuator are disposed on the door of the vehicle.

5. The circuit of Claims 2, 3 or 4 wherein said controller is disposed on a portion of the vehicle other than said door.

6. The circuit of Claim 1 wherein said switching mechanism comprises a plurality of switches, each actuable to change the resistance of said resistive circuit in a unique way.

7. The circuit of Claim 1 wherein said switching mechanism comprises a plurality of switches, each controlling one of a plurality of interconnected resistors.

8. The circuit of Claim 7 wherein said plurality of interconnected resistors are in parallel.

9. The circuit of Claim 1 wherein said logic gating circuit comprises a plurality of bistable means operated by said controller.

10. The circuit of Claim 9 wherein said bistable means comprise relays.

11. The circuit of Claim 1 wherein said logic gating circuit defines a communication mode in which current is supplied to said resistive circuit.

12. The circuit of Claim 1 wherein said logic gating circuit defines an actuation mode in which power is supplied to said actuator and current is not supplied to said resistive circuit.

13. The circuit of Claim 1 wherein said logic gating circuit defines a first actuation mode in which power is supplied to said actuator at a first polarity and a second actuation mode in which power is supplied to said actuator at a second polarity.

14. The circuit of Claim 1 further comprising a first actuator and a second actuator and wherein said logic gating circuit defines a first actuation mode in which power is supplied to said first actuator and a second actuation mode in which power is supplied to said second actuator.

15. The circuit of Claim 1 further comprising a first actuator and a second actuator and wherein said logic gating circuit defines a first actuation mode in which power is supplied to said first actuator at first polarity, a second actuation mode in which power is supplied to said second actuator at said first polarity, a third actuation mode in which power is supplied to said first and second actuator at second polarity.

16. A vehicular actuator interface circuit for coupling at least one electromechanical actuator and at least one switching mechanism to a controller of the type which controls application of operating power to the actuator in response to changes in state of switching mechanism, comprising:

a digital command generating circuit communicating with said controller for supplying selected command signals to the controller;

a logic gating circuit coupled to said actuator, to said switching mechanism and to said controller;

said switching mechanism coupled to said command generating circuit for selecting the command to be sent to said controller in response to changes in state of said switching mechanism;

said logic gating circuit selectively coupling said command generating circuit to said controller to thereby communicate the state of said switching mechanism to said controller and alternately coupling said actuator to said controller thereby applying power to said actuator.

17. The circuit of Claim 16 wherein said switching mechanism is disposed on the door of the vehicle.

18. The circuit of Claim 16 wherein said actuator is disposed on the door of the vehicle.

19. The circuit of Claim 16 wherein said switching mechanism and said actuator are disposed on the door of the vehicle.

20. The circuit of Claims 17, 18 or 19 wherein said controller is disposed on a portion of the vehicle other than said door.

21. The circuit of Claim 16 wherein said switching mechanism comprises a plurality of switches, each actuable to produce a unique code representative of the state of said switch.

22. The circuit of Claim 16 wherein said logic gating circuit comprises a plurality of bistable means operated by said controller.

23. The circuit of Claim 22 wherein said bistable means comprise relays.

24. The circuit of Claim 16 wherein said logic gating circuit defines a communication mode in which current is supplied to said resistive circuit.

25. The circuit of Claim 16 wherein said logic gating circuit defines an actuation of mode in which power is supplied to said actuator and current is not supplied to said resistive circuit.

26. The circuit of Claim 16 wherein said logic gating circuit defines a first actuation mode in which power is supplied to said actuator at a first polarity and a second actuation mode in which power is supplied to said actuator at a second polarity.

27. The circuit of Claim 16 further comprising a first actuator and a second actuator and wherein said logic gating circuit defines a first actuation mode in which power is supplied to said first actuator and a second actuation mode in which power is supplied to said second actuator.

28. The circuit of Claim 16 further comprising a first actuator and a second actuator and wherein said logic gating circuit defines a first actuation mode in which power is supplied to said first actuator at first polarity, a second actuation mode in which power is supplied to said second actuator at said first polarity, a third actuation mode in which power is supplied to said first and second actuator at second polarity.

Fig-1

EP 0 487 995 A2

| MODE / RELAY | R1 | R2 | R3 | R4 |
|---|---|---|---|---|
| STAND BY | 0 | 0 | 0 | 0 |
| NORMAL LOCK | 0 | 0 | 1 | 1 |
| SUPER LOCK | 1 | 0 | 1 | 1 |
| UNLOCK | 0 | 1 | 0 | 1 |

Fig-2

Fig-3

Fig-4